# FASCICULE DE BREVET EUROPEEN

(11) **EP 3 898 416 B1**
(45) Date de publication et mention de la délivrance du brevet: **13.11.2024**
(21) Numéro de dépôt: 19812780.5
(22) Date de dépôt: 03.12.2019
(51) Int. Cl.: B64D 43/00

(54) **SYSTEME DE FIXATION D'UNE PLANCHE DE BORD D'UN POSTE DE PILOTAGE D'UN AERONEF**
BEFESTIGUNGSSYSTEM FÜR EIN INSTRUMENTENBRETT EINES FLUGZEUGCOCKPITS
FASTENING SYSTEM FOR A MAIN INSTRUMENT PANEL OF AN AIRCRAFT COCKPIT

(30) Priorité: 18.12.2018 FR 1873217
(43) Date de publication de la demande: 27.10.2021
(73) Titulaire: Airbus Atlantic, 17300 Rochefort (FR)
(72) Inventeur: BERGERET, Christian, 31650 SAINT-ORENS DE GAMEVILLE (FR); ANDRIEU, Gilles, 31140 MONTBERON (FR); BRANCO, Alexandre, 31130 PIN-BALMA (FR)
(74) Mandataire: Argyma
(86) Numéro de dépôt international: PCT/EP2019/083383
(87) Numéro de publication internationale: WO 2020/126451

(56) Documents cités:
- FR-A1- 2 980 456
- FR-A1- 2 991 295
- US-A1- 2014 175 225
- BEN SOARBYWIRE: "Main Instrument Panel Support Structure | Soarbywire", 9 August 2018 (2018-08-09), XP055596097, Retrieved from the Internet <URL:https://soarbywire.com/2018/08/09/main-instrument-panel-support-structure/> [retrieved on 20190613]

## Description

### DOMAINE TECHNIQUE DE L'INVENTION

La présente invention concerne le montage d'un poste de pilotage d'un aéronef et vise plus particulièrement un système de fixation d'une planche de bord d'un poste de pilotage d'un avion.

### ETAT DE LA TECHNIQUE

De manière connue, un poste de pilotage d'avion, monté dans une cabine de pilotage, comprend une pluralité de meubles intérieurs permettant de recevoir les différents équipements nécessaires au pilotage de l'avion, tels que des écrans de contrôle et des dispositifs de commande de vol.

Plus précisément, le poste de pilotage comprend, de manière connue, une console centrale, disposée entre les deux sièges destinés au pilote et au co-pilote de l'avion et comprenant généralement le levier de contrôle moteur, deux consoles latérales, disposées de part et d'autre du poste de pilotage et accessibles chacune par le pilote ou le co-pilote, et une planche de bord, s'étendant sensiblement transversalement à l'avant du poste de pilotage. Une telle planche de bord est notamment configurée pour présenter au pilote et au co-pilote les différents écrans d'affichage des données relatives à la navigation.

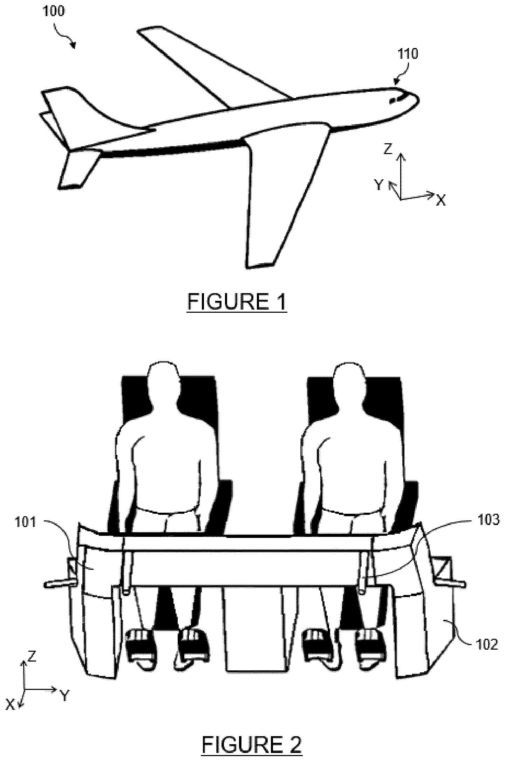

Dans ce document, le terme transversal est défini en référence à la figure 1, dans laquelle, à titre d'exemple, un avion 100 s'étend longitudinalement selon un axe X, latéralement selon un axe Y et verticalement selon un axe Z de manière à former un repère orthogonal (X, Y, Z). Dans un tel repère, le terme « transversal » définit un objet s'étendant suivant la largeur de l'avion 100 dans le plan (Y, Z). De plus, dans un tel repère, l'avant et l'arrière sont définis selon l'axe X en référence au déplacement de l'avion 100 en vol. Autrement dit, toujours en référence à la figure 1, l'avant et l'arrière de l'avion 100, et donc de la cabine de pilotage 110, sont définis selon l'axe X sur la figure 1 qui est orienté de l'arrière vers l'avant.

A ce jour, comme représenté sur la figure 2, une planche de bord 101 est généralement fixée à la structure de l'avion par l'intermédiaire de deux pieds métalliques 102 reliant la planche de bord 101 au plancher, ainsi que par un ensemble d'éléments de liaison métalliques reliant la planche de bord 101 directement aux parois internes de la cabine de pilotage, c'est-à-dire directement au fuselage de l'avion. A titre d'exemple, une planche de bord est généralement fixée à l'avant par l'intermédiaire de bielles 103 reliant directement la planche de bord 101 au cadre du pare-brise de l'avion.

Cependant, un tel système de fixation présente de nombreux inconvénients. En effet, les pieds métalliques, usinés et donc complexes et onéreux à fabriquer, augmentent considérablement la masse des meubles intérieurs, entrainant des contraintes supplémentaires dans le plancher auquel les pieds métalliques sont fixés. De plus, la reprise directe des bielles sur la structure principale de l'avion présente l'inconvénient de générer des efforts importants dans les liaisons de la planche de bord, imposant de renforcer la structure de la planche de bord pour résister à de tels efforts.

De plus, lorsque l'avion est en vol, sa structure principale, et notamment le fuselage, subit des déformations dues aux conditions de vol (pression, vitesse de l'appareil, ...). La planche de bord étant reliée directement au fuselage, cette dernière est très sollicitée. De telles déformations entrainent en effet une augmentation des efforts dans les liaisons, entrainant une augmentation des contraintes dans la planche de bord elle-même, ce qui présente l'inconvénient de nécessiter une structure de la planche de bord plus robuste et donc plus lourde, plus complexe à fabriquer et plus difficile à monter dans le poste de pilotage, ce qui augmente de surcroît la pénibilité des opérateurs.

En outre, un tel système de fixation de la planche de bord, directement relié à la structure principale de l'avion, présente l'inconvénient de nécessiter une adaptation à chaque type d'appareil. En effet, suivant les différents types d'avion, la forme du fuselage est différente, ce qui implique une adaptation importante de la dimension des bielles et des points d'accroche par exemple sur le cadre du pare-brise. Chaque système de fixation d'une planche de bord devient ainsi spécifique d'un type d'avion, ce qui ne permet pas une harmonisation du système de fixation, entrainant une augmentation des coûts et de la logistique de fabrication, de stockage et de montage.

Un des objectifs de la présente invention est de proposer un système de fixation d'une planche de bord simple, économique et permettant de limiter les efforts transmis dans la planche de bord, de manière à proposer un système de fixation d'une planche de bord simplifié et allégé et dont les points de reprise ne sont pas directement reliés au fuselage de l'avion. L'invention a également pour but de proposer un système de fixation adaptable à tout type d'avion, permettant un assemblage du poste de pilotage hors de la structure de l'avion, permettant ainsi de limiter les coûts et les temps de montage du poste de pilotage complet.

On connait du document FR2980456A1 une planche de bord fixée au plancher de la cabine de pilotage par le biais de deux pieds latéraux et deux pieds centraux, chaque pied central étant constitué d'un couple de vérins permettant l'inclinaison de la planche de bord. Le document FR2980456A1 enseigne de relier la planche de bord aux blocs mini-manches latéraux qui prennent appui latéralement sur la structure principale intérieure de la cabine de pilotage. Ce document n'aborde pas la problématique de la transmission des efforts entre la structure principale de l'avion et les meubles intérieurs du poste de pilotage.

### PRESENTATION DE L'INVENTION

A cet effet, l'invention concerne un poste de pilotage adapté pour être monté dans une cabine de pilotage d'un aéronef, ledit poste de pilotage, comprenant un plancher, une pluralité de meubles intérieurs et une planche de bord, configurée pour recevoir une pluralité de dispositifs de commande et/ou de contrôle dudit aéronef, ledit poste de pilotage comprenant un système de fixation reliant ladite planche de bord uniquement audit plancher et/ou à ladite pluralité de meubles intérieurs.

Un tel système de fixation permet avantageusement de dissocier la planche de bord du fuselage de l'avion ou du cadre du pare-brise, permettant de s'affranchir des mouvements et des déformations de la structure de l'avion lors d'un vol. Le système de fixation selon l'invention permet ainsi de limiter les efforts dans les fixations de la planche de bord, permettant ainsi de limiter les contraintes dans la planche de bord. En outre, le système de fixation selon l'invention permet un pré-assemblage du poste de pilotage complet hors de l'avion, permettant de limiter les temps ainsi que les coûts de montage.

L'invention concerne en outre un poste de pilotage adapté pour être monté dans une cabine de pilotage d'un aéronef, ledit poste de pilotage comprenant un plancher, au moins une console centrale et deux consoles latérales et une planche de bord, configurée pour recevoir une pluralité de dispositifs de commande et/ou de contrôle dudit aéronef, ledit poste de pilotage comprenant un système de fixation comprenant une pluralité d'organes de fixation reliant directement la planche de bord à la console centrale et au deux consoles latérales.

De manière avantageuse, cela permet une répartition des efforts dus au poids de la planche de bord et des équipements en différents points de la planche de bord. L'ajout de points d'appuis supplémentaires sur les meubles permet en outre d'optimiser la répartition des efforts dans la planche de bord. Une telle reprise sur les meubles intérieurs permet en outre la reprise des efforts également par les pieds des meubles intérieurs du poste de pilotage, permettant avantageusement une meilleure répartition de la transmission des efforts sur le plancher, limitant ainsi les risques de sur-contraintes locales.

De préférence, ladite pluralité de meubles intérieurs comprenant au moins une console centrale et deux consoles latérales, la planche de bord est uniquement fixée au plancher, à ladite console centrale et à chacune desdites deux consoles latérales.

De préférence encore, le système de fixation comporte au moins trois organes de fixation de meuble.

Selon une caractéristique de l'invention, le système de fixation comporte au moins deux organes de fixation de plancher.

Selon un aspect de l'invention, le système de fixation comprenant au moins un organe de fixation de plancher reliant le plancher à la planche de bord, ledit organe de fixation de plancher comprenant au moins une liaison rotule. Une telle rotule permet le rattrapage d'éventuels jeux de fabrication, comme l'imprécision d'un orifice de fixation par exemple, tout en permettant d'absorber les déplacements du plancher en vol, dû aux déformations de la structure primaire de l'avion.

De manière préférée, l'organe de fixation de plancher se présente sous la forme d'une bielle de longueur réglable. Un tel organe de fixation de plancher permet d'adapter la fixation de la planche de bord en différents points du plancher en s'affranchissant des tolérances de fabrication des différents éléments. De tels organes de fixation de plancher permettent également d'adapter le système de fixation à différentes configurations du poste de pilotage, par exemple installés dans différents modèles d'avion de différents constructeurs.

De préférence, ladite planche de bord comprenant une portion centrale et deux portions latérales, le système de fixation comprenant une pluralité d'organes de fixation de plancher, ladite pluralité d'organes de fixation de plancher comprend au moins un organe de fixation latérale fixé sur l'une des portions latérales de la planche de bord selon un point de fixation, et au moins un organe de fixation centrale fixé sur la portion centrale de la planche de bord selon un point de fixation.

Un tel système de fixation permet avantageusement une reprise des efforts sur l'ensemble de la planche de bord, ce qui permet une meilleure répartition des contraintes, limitant ainsi les sur-contraintes locales qui peuvent être source d'endommagement de la structure de la planche de bord.

De manière préférée, ladite cabine de pilotage présentant un arrière et un avant, ledit poste de pilotage comprenant une extrémité avant destinée à être positionnée à l'avant de la cabine de pilotage, ledit plancher s'étendant horizontalement dans le poste de pilotage, l'organe de fixation latérale étant relié à la planche de bord par l'intermédiaire d'un point de fixation, ledit organe de fixation latérale s'étend depuis ledit point de fixation vers le plancher dans une direction s'étendant vers l'extrémité avant du poste de pilotage.

De préférence, ledit organe de fixation latérale forme un angle β avec un axe vertical s'étendant depuis le point de fixation, l'angle β. Un tel angle β permet avantageusement la reprise des efforts suivant un axe longitudinal de l'avion, s'étendant depuis l'arrière vers l'avant de l'avion, c'est-à-dire vers la cabine de pilotage. De tels efforts sont notamment importants lors du décollage, de l'atterrissage ou lors d'un crash de l'avion, le positionnement en biais permet ainsi de s'assurer du bon maintien de la planche de bord, sans que celle-ci ne soit liée à la structure principale de l'avion, quelles que soient les contraintes de forces et de pressions auxquelles est soumis l'avion et donc le poste de pilotage.

Selon un autre aspect, la planche de bord s'étendant latéralement, ladite pluralité d'organes de fixation de meuble comprend deux organes de fixation centrale qui s'étendent dans des directions latérales différentes depuis la planche de bord. Cela permet avantageusement une reprise des efforts dans les deux directions d'un axe latéral de l'avion.

De manière préférée, les deux organes de fixation centrale ont un point de fixation commun à la planche de bord.

De préférence, chaque organe de fixation centrale forme un angle θ1, θ2 avec un axe vertical s'étendant depuis le point de fixation. Un tel angle θ1, θ2 permet une reprise optimale des efforts dans l'axe latéral de l'avion, permettant de maintenir l'ensemble du poids des équipements installés dans la planche de bord.

De manière préférée, le système de fixation est constitué d'une pluralité d'organes de fixation reliant la planche de bord au plancher et/ou à ladite pluralité de meubles intérieurs. Autrement dit, aucun organe de fixation ne relie directement la planche de bord à ladite cabine de pilotage.

L'invention concerne également une cabine de pilotage d'un aéronef, la cabine de pilotage comprenant une ossature structurelle et un poste de pilotage, tel que présenté précédemment, dont seul le plancher est fixé à l'ossature structurelle de la cabine de pilotage.

L'invention concerne en outre un procédé de montage d'un poste de pilotage, tel que présenté précédemment, dans une cabine de pilotage d'un aéronef, la cabine de pilotage comprenant une ossature structurelle, le procédé comportant :
- une étape de fixation de la planche de bord au plancher et/ou à ladite pluralité de meubles intérieurs pour former le poste de pilotage et
- une étape de fixation du plancher du poste de pilotage à l'ossature structurelle de la cabine de pilotage, la planche de bord du poste de pilotage n'étant pas fixée à l'ossature structurelle de la cabine de pilotage.

De manière préférée, le procédé comporte une étape de positionnement du poste de pilotage assemblé dans la cabine de pilotage.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'un avion.
La figure 2 représente schématiquement une vue arrière d'un système de fixation d'une planche de bord selon l'art antérieur.
La figure 3 est une vue de face d'un poste de pilotage comprenant un système de fixation d'une planche de bord selon une forme de réalisation de l'invention.
La figure 4 est une vue de dos du poste de pilotage comprenant le système de fixation de la figure 3.
La figure 5 représente schématiquement les organes de fixation de plancher du système de fixation de la figure 3.
La figure 6A est une vue arrière du positionnement et de l'orientation des organes de fixation de plancher de la figure 5.
La figure 6B est une vue de côté du positionnement et de l'orientation des organes de fixation de plancher de la figure 5 et
La figure 7 représente schématiquement une vue de dessus les points de reprise du système de fixation sur un plancher du poste de pilotage de la figure 3.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 1, il est représenté un avion 100 s'étendant longitudinalement selon un axe X orienté d'arrière en avant, latéralement selon un axe Y orienté de la droite vers la gauche et verticalement selon un axe Z orienté du bas vers le haut de manière à former un repère orthogonal (X, Y, Z). Dans un tel repère, le terme « horizontal » définit un objet s'étendant dans le plan (X, Y) et le terme « transversal », un objet s'étendant dans le plan (Y, Z).

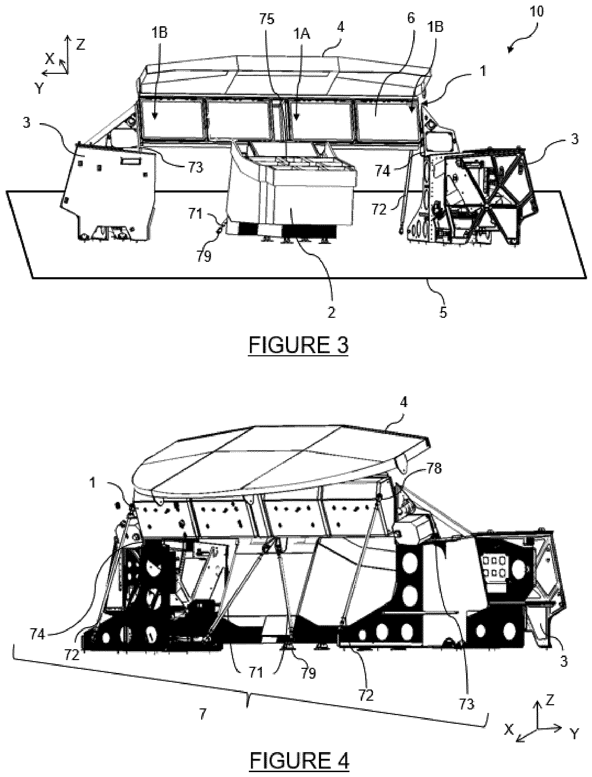

De manière connue, l'avion 100 comporte à l'avant une cabine de pilotage 110, délimitant la portion de fuselage située à l'avant de l'avion 100 et dans laquelle se trouve le pilote et le co-pilote. La cabine de pilotage 110 comporte une ossature structurelle configurée pour recevoir un poste de pilotage 10 (figure 3). Selon une forme de réalisation préférée de l'invention, le poste de pilotage 10 est configuré pour être monté dans la cabine de pilotage 110 après assemblage de l'ensemble des éléments du poste de pilotage 10.

En référence à la figure 3, il est représenté un poste de pilotage 10 qui est adapté pour être monté dans la cabine de pilotage 110. Le poste de pilotage 10 comprend l'ensemble des dispositifs nécessaires au pilotage de l'avion 100. Un tel poste de pilotage 10 comprend ainsi une planche de bord 1, une pluralité de meubles intérieurs et un plancher 5, sur lequel reposent les meubles intérieurs. Dans cet exemple, la pluralité de meubles intérieurs comprend, une console centrale 2, disposée entre les deux sièges destinés au pilote et au co-pilote de l'avion 100 (non représentés), et deux consoles latérales 3, positionnées de part et d'autre du poste de pilotage 10 et accessibles chacune par le pilote ou le co-pilote. Chacun des meubles intérieurs est configuré pour recevoir une pluralité de dispositifs de commande et/ou de contrôle de la navigation de l'avion 100, comme le levier de contrôle moteur (communément désignée manette des gaz), des boutons de commande ou des jauges de contrôle de carburant ou de l'altitude par exemple.

Dans le poste de pilotage 10, le plancher 5 s'étend horizontalement, c'est-à-dire dans un plan parallèle au plan (X, Y), et est configuré pour recevoir l'ensemble des meubles intérieurs. Un tel plancher 5 est configuré pour être monté dans la cabine de pilotage 110 et pour être fixé au fuselage de l'avion 100, en particulier l'ossature structurelle de la cabine de pilotage 110, de manière à solidariser l'ensemble du poste de pilotage 10 à la structure principale de l'avion 100.

En effet, selon une forme de réalisation préférée, le poste de pilotage 10 suivant l'invention est configuré pour être assemblé hors de l'avion 100 et pour être monté dans la cabine de pilotage 110 une fois l'ensemble des composants assemblés. Autrement dit, le poste de pilotage 10 selon l'invention, intégré dans la cabine de pilotage 110, comprend directement le plancher 5 sur lequel sont déjà montés les meubles intérieurs et la planche de bord 1, qui ne comprennent ainsi pas de fixation directe à la structure principale de l'avion 100. Ainsi, les meubles sont montés à la structure principale de l'avion 100 via le plancher 5.

Toujours en référence à la figure 3, la planche de bord 1 comprend une portion centrale 1A et deux portions latérales 1B et s'étend sensiblement transversalement dans le poste de pilotage 10. Autrement dit, la longueur de la planche de bord 1 s'étend dans la largeur de l'avion 100, suivant l'axe Y de manière à présenter au pilote et au co-pilote un ensemble de dispositifs de commande et/ou de contrôle de vol, par exemple une pluralité d'écrans d'affichage 6.

Dans la suite de ce document, l'avant de la planche de bord 1 définit la surface faisant face au pilote et au co-pilote en vol, c'est-à-dire la face de la planche de bord 1 orientée vers l'arrière de la cabine de pilotage 10. Autrement dit, l'avant et l'arrière de la planche de bord 1 sont inversés par rapport à l'avant et l'arrière du poste de pilotage 10.

Selon une forme de réalisation préférée de l'invention, en référence à la figure 4, la planche de bord 1 comprend un système de fixation 7 configuré pour permettre la fixation de la planche de bord 1 uniquement aux éléments du poste de pilotage 10. Autrement dit, la planche de bord 1 peut, grâce au système de fixation 7, être montée sur le poste de pilotage 10 hors de la cabine de pilotage 110, ce qui représente un gain de temps important lors du montage de l'avion 100, permettant ainsi une réduction des coûts. Le montage du poste de pilotage 10 hors de la cabine de pilotage 110 permet en outre d'améliorer la manipulation des composants par les opérateurs, ainsi que l'accessibilité aux fixations. En effet, grâce à l'invention, les opérateurs peuvent aisément se déplacer autour du poste de pilotage 10, sans être gênés par le fuselage qui délimite bien souvent une cabine de pilotage 110 étroite.

Un tel système de fixation 7 permet également de s'affranchir de fixations directes entre la planche de bord 1 et l'ossature structurelle de la cabine de pilotage 110, permettant avantageusement de limiter les efforts transmis par la structure principale de l'avion 100 et ainsi de limiter les contraintes dans la planche de bord 1. En effet, lorsque l'avion 100 est en vol, son fuselage subit des déformations dues à la vitesse de l'avion 100 et à la différence de pression appliquée sur les surfaces de l'avion 100. Aussi, la fixation de la planche de bord 1 uniquement au poste de pilotage 10 permet avantageusement de ne pas contraindre la planche de bord 1 du fait des mouvements de déformation de l'avion 100.

Dans une forme de réalisation préférée de l'invention, en référence à la figure 4, le système de fixation 7 comprend une pluralité d'organes de fixation permettant de relier la planche de bord 1 au plancher 5 ainsi qu'à la console centrale 2 et aux consoles latérales 3. De préférence, le système de fixation 7 comprend une pluralité d'organes de fixation permettant de relier la planche de bord 1 au plancher 5 du poste de pilotage 10, désignés « organes de fixation de plancher », et une pluralité d'organes de fixation correspondant à des points d'appui et de fixation de la planche de bord 1 sur les meubles intérieurs du poste de pilotage 10, désignés « organes de fixation de meubles ».

En référence aux figures 3 et 4, le système de fixation 7 selon l'invention comprend quatre organes de fixation de plancher 71, 72 et trois organes de fixation de meuble 73, 74, 75 reliant la planche de bord 1 respectivement à la console centrale 2 et à chaque console latérale 3.

Selon un aspect préféré de l'invention, les organes de fixation de plancher comprennent deux organes de fixation latérale 72 fixés sur les portions latérales 1B de la planche de bord 1, et deux organes de fixation centrale 71 fixés sur la portion centrale 1A de la planche de bord 1. Dans cet exemple, chaque organe de fixation de plancher se présente sous la forme d'une bielle, reliant directement la planche de bord 1 au plancher 5 du poste de pilotage 10. De telles bielles présentent l'avantage de permettre une liaison par l'intermédiaire de tiges rigides et solides, dont les extrémités sont articulées de manière à pouvoir s'adapter à la position des points de fixation sur le plancher 5. A titre d'exemple, de telles bielles permettent de rattraper des écarts de positionnement des points de fixation du plancher 5.

Dans cette forme de réalisation, chaque bielle comporte un corps longitudinal et deux extrémités de fixation qui sont respectivement reliées au corps longitudinal par deux rotules afin d'assurer une orientation optimale et une flexibilité lors du positionnement.

Dans cette forme de réalisation préférée, toujours en référence à la figure 4, le système de fixation 7 est constitué de deux organes de fixation centrale 71 et deux organes de fixation latérale 72, respectivement reliées à la portion centrale 1A et aux portions latérales 1B de la planche de bord 1.

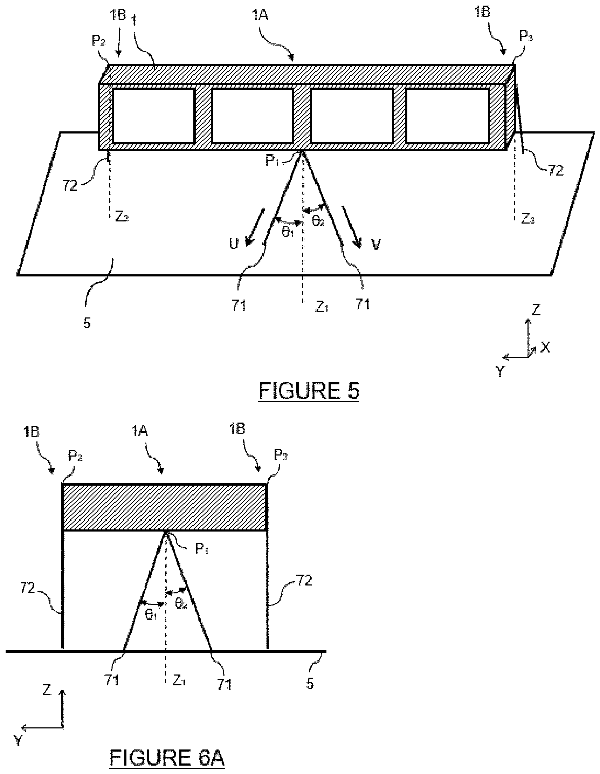

Comme cela est représenté sur les figures 5 et 6A, les organes de fixation centrale 71 sont reliés à un point de fixation commun P1 de la planche de bord 1, positionné sensiblement au milieu de la longueur de la planche de bord 1. Néanmoins, il va de soi qu'une fixation selon deux points différents pourrait également convenir.

Les organes de fixation centrale 71 s'étendent de part et d'autre du centre de la planche de bord 1, dans des directions différentes, désignées dans cet exemple U et V. De manière préférée, chaque organe de fixation centrale 71 forme, dans le plan (Y, Z), avec un axe vertical Z1 (parallèle à l'axe Z) passant par le point de fixation commun P1, un angle θ1, θ2 permettant une reprise des efforts latéraux (c'est-à-dire suivant l'axe latéral Y). De préférence encore, les angles θ1 et θ2 sont égaux et opposés de manière à permettre un équilibre optimal des appuis de la planche de bord 1, ainsi qu'une répartition des efforts latéraux dans le plancher 5. Dans cet exemple, les angles θ1 et θ2, permettent d'assurer la reprise des efforts liés aux mouvements de l'avion 100, dans l'axe Y.

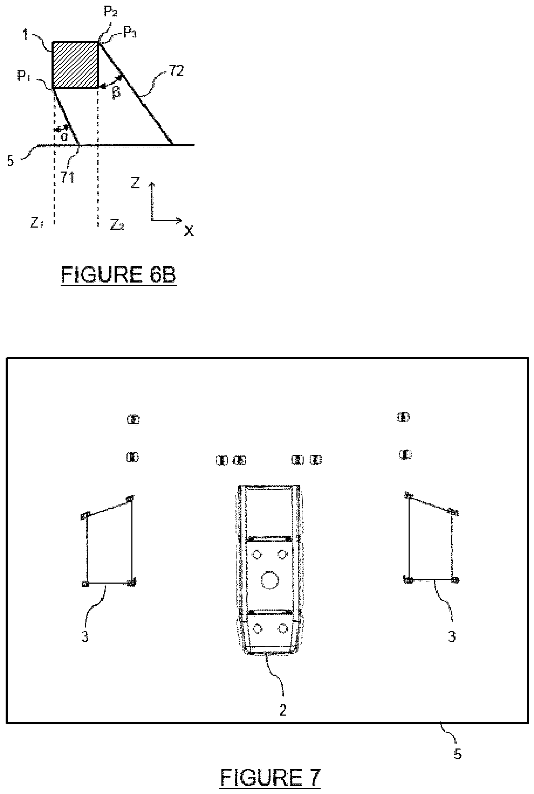

En référence à la figure 6B, chaque organe de fixation centrale 71 est également inclinée vers l'avant du poste de pilotage 10, c'est-à-dire dans la direction de l'axe X, de manière à permettre également une reprise des efforts dans l'axe longitudinal de l'avion 100. Une telle inclinaison permet de limiter les efforts en X dans les autres organes de fixation. De préférence, chaque organe de fixation centrale 71 forme, dans le plan (X, Z), avec l'axe vertical Z1 passant par le point de fixation P1, un angle α, permettant d'assurer la reprise des efforts liés à l'accélération et au freinage de l'avion. Une telle configuration permet ainsi de répartir les efforts dus par exemple à l'accélération de l'avion 100 au décollage dans l'ensemble des organes de fixation du système de fixation 7.

Ce document présente l'exemple de deux organes de fixation centrale 71 présentant des angles d'inclinaisons θ et α identiques, cependant il va de soi que les angles θ et α pourraient tout aussi bien être différents suivant la configuration de l'avion 100.

Comme cela est représenté sur les figures 5 et 6B, les organes de fixation latérale 72 sont reliés à des points de fixation P2, P3 positionnés à l'arrière de la planche de bord 1, c'est-à-dire sur la face orientée vers l'avant de la cabine de pilotage 110, lorsque la planche de bord 1 est montée dans le poste de pilotage 10. De tels points de fixation P2, P3 sont placés de préférence de part et d'autre de la planche de bord 1, au niveau des portions latérales 1B. Les organes de fixation latérale 72 s'étendent dans des directions sensiblement parallèles, vers l'avant du poste de pilotage 10, c'est-à-dire selon l'axe X. De manière préférée, chaque organe de fixation latérale 72 forme, dans le plan (X, Z), respectivement avec un axe vertical Z2 (parallèle à l'axe Z) passant par le point de fixation P2, et un axe vertical Z3 (parallèle à l'axe Z) passant par le point de fixation P3, un angle β permettant une reprise des efforts dans la direction longitudinale de l'avion 100, c'est-à-dire dans la direction X.

Ce document présente l'exemple de deux organes de fixation latérale 72 présentant un angle d'inclinaison β identiques, cependant il va de soi que les angles de chaque organe de fixation latérale 72 pourraient tout aussi bien être différents suivant la configuration de l'avion 100.

De manière complémentaire, chaque organe de fixation latérale 72 pourrait également être incliné latéralement de part et d'autre de la planche de bord 1 de manière à limiter la sollicitation des bielles centrales dans la reprise des efforts latéraux, c'est-à-dire dans la direction Y.

Chaque organe de fixation de plancher étant fixé au plancher 5, l'ensemble des organes de fixation de plancher permet avantageusement la reprise des efforts dans la direction Z, c'est-à-dire agissant suivant la hauteur du poste de pilotage 10.

Afin d'assurer la stabilité de la planche de bord 1, le système de fixation 7 comprend en outre une pluralité d'organes de fixation de meuble qui se présentent sous la forme d'une pluralité de points de reprise 73, 74, 75, également désignés points d'appui, permettant à la planche de bord 1 d'être également fixée aux meubles intérieurs du poste de pilotage 10. De tels points de reprise présentent l'avantage de permettre une meilleure répartition des efforts sur le plancher 5.

En effet, comme représenté sur les figures 3 et 4, le système de fixation 7 comprend de préférence trois points de reprise 73, 74, 75, reliant respectivement la planche de bord 1 aux deux consoles latérales 3 et à la console centrale 2. De tels points de reprise 73, 74, 75 se présentent dans cet exemple sous la forme de surfaces planes (non représentées) reposant directement sur les meubles intérieurs et présentant une surface d'appui suffisamment étendue pour limiter les sur-contraintes locales sur la planche de bord 1. De telles surfaces planes comprennent de préférence au moins un orifice de fixation, de préférence encore une pluralité d'orifices (non représentés), permettant l'insertion par exemple d'une vis ou d'un rivet, de manière à fixer la planche de bord 1 directement sur la console centrale 2 et sur les consoles latérales 3.

Comme défini précédemment, l'avant de la planche de bord 1 correspond à la surface faisant face au pilote et au co-pilote dans le poste de pilotage 10. Aussi, dans cet exemple, la planche de bord 1 comprend une surface d'appui dite « centrale », désignée point de reprise central 75, située à l'avant de la planche de bord 1 sur une surface inférieure et reposant sur l'avant de la console centrale 2. La planche de bord 1 comprend en outre deux surfaces d'appui dites « latérales », désignées points de reprise latéraux, situées aux extrémités à l'avant de la planche de bord 1 et reposant chacune sur une console latérale 3.

De tels organes de fixation de meuble permettent, via la console centrale 2 et les consoles latérales 3, une meilleure répartition des efforts à la fois dans la planche de bord 1 et sur le plancher 5.

Le système de fixation 7 selon l'invention permet avantageusement une reprise de la planche de bord 1 uniquement sur le plancher 5, directement ou indirectement via la console centrale 2 et les consoles latérales 3, comme cela est représenté sur la figure 7. Un tel système de fixation 7 permet de s'affranchir d'une reprise directe sur la structure principale de l'avion 100, c'est-à-dire sur le fuselage, permettant avantageusement de limiter la transmission des efforts dus aux déformations du fuselage en vol. La limitation de la transmission des efforts présente l'avantage de limiter les contraintes dans la planche de bord, permettant ainsi de limiter son usure ou sa détérioration. De plus, le système de fixation selon l'invention permet avantageusement de pouvoir monter l'ensemble du poste de pilotage hors de l'avion, permettant à la fois de faciliter l'intégration du poste de pilotage 1 et de gagner du temps lors du montage de l'avion. Un tel montage hors de l'avion permet également de faciliter à la fois la manipulation des composants par les opérateurs et l'accessibilité autour du poste de pilotage lors de l'assemblage de ce dernier.

## Revendications

1. Poste de pilotage (10) adapté pour être monté dans une cabine de pilotage (110) d'un aéronef, ledit poste de pilotage (10) comprenant un plancher (5), une pluralité de meubles intérieurs (2, 3) et une planche de bord (1), configurée pour recevoir une pluralité de dispositifs de commande et/ou de contrôle dudit aéronef, ladite planche de bord (1) s'étendant latéralement et comprenant une portion centrale (1A) et deux portions latérales (1B), ledit poste de pilotage (10) comprenant un système de fixation (7) reliant ladite planche de bord (1) uniquement audit plancher (5) et/ou à ladite pluralité de meubles intérieurs (2, 3), le système de fixation (7) comprenant une pluralité d'organes de fixation de plancher, ladite pluralité d'organes de fixation de plancher comprenant au moins un organe de fixation latérale (72) fixé sur l'une des portions latérales (1B) de la planche de bord (1) selon un point de fixation et deux organes de fixation centrale (71), **caractérisé en ce que** chaque organe de fixation centrale (71) est fixé sur la portion centrale (1A) de la planche de bord (1) selon un point de fixation, les deux organes de fixation centrale (71) s'étendant dans des directions latérales différentes depuis la planche de bord (1).

2. Poste de pilotage (10) selon la revendication 1, dans lequel, ladite pluralité de meubles intérieurs comprenant au moins une console centrale (2) et deux consoles latérales (3), la planche de bord (1) est uniquement fixée au plancher (5), à ladite console centrale (2) et à chacune desdites deux consoles latérales (3).

3. Poste de pilotage (10) selon l'une des revendications 1 et 2, dans lequel, au moins un organe de fixation de plancher de ladite pluralité d'organes de fixation de plancher comprend au moins une liaison rotule.

4. Poste de pilotage (10) selon l'une des revendications 1 à 3, dans lequel, au moins un organe de fixation de plancher de la pluralité d'organes de fixation de plancher se présente sous la forme d'une bielle de longueur réglable.

5. Poste de pilotage (10) selon l'une des revendications 1 à 4, dans lequel, ladite cabine de pilotage (110) présentant un arrière et un avant, ledit poste de pilotage (10) comprenant une extrémité avant destinée à être positionnée à l'avant de la cabine de pilotage (110), ledit plancher (5) s'étendant horizontalement dans le poste de pilotage (10), l'organe de fixation latérale (72) étant relié à la planche de bord (1) par l'intermédiaire d'un point de fixation, ledit organe de fixation latérale (72) s'étend depuis ledit point de fixation vers le plancher (5) dans une direction s'étendant vers l'extrémité avant du poste de pilotage (10).

6. Poste de pilotage (10) selon l'une des revendications 1 à 5, dans lequel le système de fixation (7) est constitué d'une pluralité d'organes de fixation reliant la planche de bord (1) au plancher (5) et/ou à ladite pluralité de meubles intérieurs (2, 3).

7. Poste de pilotage (10) selon l'une des revendications 1 à 6, dans lequel les deux organes de fixation centrale (71) ont un point de fixation commun à la planche de bord (1).

8. Cabine de pilotage (110) d'un aéronef, la cabine de pilotage (110) comprenant une ossature structurelle et un poste de pilotage (10) selon l'une des revendications 1 à 7, dont seul le plancher (5) est fixé à l'ossature structurelle de la cabine de pilotage (110).

9. Procédé de montage d'un poste de pilotage (10) selon l'une des revendications 1 à 7, dans une cabine de pilotage (110) d'un aéronef, la cabine de pilotage (110) comprenant une ossature structurelle, le procédé comportant :
- une étape de fixation de la planche de bord (1) au plancher (5) et/ou à ladite pluralité de meubles intérieurs (2, 3) pour former le poste de pilotage (10) et
- une étape de fixation du plancher (5) du poste de pilotage (10) à l'ossature structurelle de la cabine de pilotage (110), la planche de bord (1) du poste de pilotage (10) n'étant pas fixée à l'ossature structurelle de la cabine de pilotage (110).

## Patentansprüche

1. Steuerstand (10), der zur Montage in einem Cockpit (110) eines Luftfahrzeugs geeignet ist, wobei der Steuerstand (10) einen Boden (5), eine Vielzahl von Innenmöbeln (2, 3) und ein Instrumentenbrett (1) umfasst, das zur Aufnahme einer Vielzahl von Steuer- und/oder Kontrollvorrichtungen des Luftfahrzeugs ausgelegt ist, wobei sich das Instrumentenbrett (1) seitlich erstreckt und einen Mittelabschnitt (1A) und zwei Seitenabschnitte (1B) umfasst, wobei der Steuerstand (10) ein Befestigungssystem (7) umfasst, das das Instrumentenbrett (1) nur mit dem Boden (5) und/oder der Vielzahl von Innenmöbeln (2, 3) verbindet, wobei das Befestigungssystem (7) eine Vielzahl von Bodenbefestigungsorganen umfasst, wobei die Vielzahl von Bodenbefestigungsorganen mindestens ein seitliches Befestigungsorgan (72), das an einem der Seitenabschnitte (1B) des Instrumentenbretts (1) gemäß einem Befestigungspunkt befestigt ist, und zwei zentrale Befestigungsorgane (71) umfasst, **dadurch gekennzeichnet, dass** jedes zentrale Befestigungsorgan (71) an dem Mittelabschnitt (1A) des Instrumentenbretts (1) gemäß einem Befestigungspunkt befestigt ist, wobei sich die beiden zentralen Befestigungsorgane (71) in unterschiedliche seitliche Richtungen ab dem Instrumentenbrett (1) erstrecken.

2. Steuerstand (10) nach Anspruch 1, wobei, da die Vielzahl von Innenmöbeln mindestens eine Mittelkonsole (2) und zwei Seitenkonsolen (3) umfasst, das Instrumentenbrett (1) nur am Boden (5), an der Mittelkonsole (2) und an jeder der beiden Seitenkonsolen (3) befestigt ist.

3. Steuerstand (10) nach einem der Ansprüche 1 oder 2, wobei mindestens ein Bodenbefestigungsorgan der Vielzahl von Bodenbefestigungsorganen mindestens eine Kugelgelenkverbindung umfasst.

4. Steuerstand (10) nach einem der Ansprüche 1 bis 3, wobei mindestens ein Bodenbefestigungsorgan von der Vielzahl von Bodenbefestigungsorganen in Form einer längenverstellbaren Pleuelstange vorliegt.

5. Steuerstand (10) nach einem der Ansprüche 1 bis 4, wobei das Cockpit (110) eine Rückseite und eine Vorderseite aufweist, wobei der Steuerstand (10) ein vorderes Ende umfasst, das dazu bestimmt ist, vorn im Cockpit (110) positioniert zu sein, wobei sich der Boden (5) horizontal im Steuerstand (10) erstreckt, das Seitenbefestigungsorgan (72) über einen Befestigungspunkt mit dem Instrumentenbrett (1) verbunden ist, wobei sich das Seitenbefestigungsorgan (72) ab dem Befestigungspunkt zum Bodens (5) in einer Richtung erstreckt, die sich zum vorderen Ende des Steuerstands (10) erstreckt.

6. Steuerstand (10) nach einem der Ansprüche 1 bis 5, wobei das Befestigungssystem (7) aus einer Vielzahl von Befestigungsorganen besteht, die das Instrumentenbrett (1) mit dem Boden (5) und/oder der Vielzahl von Innenmöbeln (2, 3) verbinden.

7. Steuerstand (10) nach einem der Ansprüche 1 bis 6, wobei die beiden zentralen Befestigungsorgane (71) einen gemeinsamen Befestigungspunkt am Instrumentenbrett (1) haben.

8. Cockpit (110) eines Luftfahrzeugs, wobei das Cockpit (110) ein Strukturgerüst und ein Steuerstand (10) nach einem der Ansprüche 1 bis 7 umfasst, von dem nur der Boden (5) an dem Strukturgerüst des Cockpits (110) befestigt ist.

9. Verfahren zur Montage eines Steuerstands (10) nach einem der Ansprüche 1 bis 7 in einem Cockpit (110) eines Luftfahrzeugs, wobei das Cockpit (110) ein Strukturgerüst umfasst, wobei das Verfahren umfasst:
- einen Schritt des Befestigens des Instrumentenbretts (1) am Boden (5) und/oder an der Vielzahl von Innenmöbeln (2, 3), um den Steuerstand (10) zu bilden, und
- einen Schritt des Befestigens des Bodens (5) des Steuerstands (10) am Strukturgerüst des Cockpits (110), wobei das Instrumentenbrett (1) des Steuerstands (10) nicht am Strukturgerüst des Cockpits (110) befestigt wird.

## Claims

1. A cockpit (10) adapted to be mounted in a pilot cabin (110) of an aircraft, said cockpit (10) comprising a floor (5), a plurality of interior furniture items (2, 3) and an instrument panel (1), configured to receive a plurality of devices for controlling and/or monitoring said aircraft, said instrument panel (1) extending laterally and comprising a central portion (1A) and two lateral portions (1B), said cockpit (10) comprising a fastening system (7) connecting said instrument panel (1) only to said floor (5) and/or to said plurality of interior furniture items (2, 3), the fastening system (7) comprising a plurality of floor fastening members, said plurality of floor fastening members comprising at least one side fastening member (72) fastened to one of the side portions (1B) of the instrument panel (1) at a fastening point and two central fastening members (71), **characterized in that** each central fastening member (71) is fastened to the central portion (1A) of the instrument panel (1) at a fastening point, the two central fastening members (71) extending in different lateral directions from the instrument panel (1).

2. The cockpit (10) according to claim 1, wherein, said plurality of interior furniture items comprising at least one central bracket (2) and two side brackets (3), the instrument panel (1) is only fastened to the floor (5), to said central bracket (2) and to each of said two side brackets (3).

3. The cockpit (10) according to any of claims 1 and 2, wherein, at least one floor fastening member of said plurality of floor fastening members comprises at least one ball joint.

4. The cockpit (10) according to any of claims 1 to 3, wherein, at least one floor fastening member of the plurality of floor fastening members is in the form of an adjustable length connecting rod.

5. The cockpit (10) according to any of claims 1 to 4, wherein, said pilot cabin (110) having a rear and a front, said cockpit (10) comprising a front end for positioning at the front of the pilot cabin (110), said floor (5) extending horizontally in the cockpit (10), the side fastening member (72) being connected to the instrument panel (1) via a fastening point, said side fastening member (72) extends from said fastening point towards the floor (5) in a direction extending towards the front end of the cockpit (10).

6. The cockpit (10) according to any of claims 1 to 5, wherein the fastening system (7) consists of a plurality of fastening members connecting the instrument panel (1) to the floor (5) and/or to said plurality of interior furniture items (2, 3).

7. The cockpit (10) according to any of claims 1 to 6, wherein the two central fastening members (71) have a common fastening point to the instrument panel (1).

8. A pilot cabin (110) of an aircraft, the pilot cabin (110) comprising a structural framework and a cockpit (10) according to one of claims 1 to 7, of which only the floor (5) is fastened to the structural framework of the pilot cabin (110).

9. A method for mounting a cockpit (10) according to one of claims 1 to 7, in a pilot cabin (110) of an aircraft, the pilot cabin (110) comprising a structural framework, the method comprising:
- a step of fastening the instrument panel (1) to the floor (5) and/or to said plurality of interior furniture items (2, 3) to form the cockpit (10) and
- a step of fastening the floor (5) of the cockpit (10) to the structural framework of the pilot cabin (110), the instrument panel (1) of the cockpit (10) not being fastened to the structural framework of the pilot cabin (110).
